# FASCICULE DE BREVET EUROPEEN

(11) **EP 0 808 557 B1**
(45) Date de publication et mention de la délivrance du brevet: **21.11.2001**
(21) Numéro de dépôt: 97401091.0
(22) Date de dépôt: 16.05.1997
(51) Int. Cl.: A01B 73/02

(54) **Appareillage pliable de traitement de sol ou de végétaux**
Faltbare Boden- oder Gewachsbearbeitungsmaschine
Foldable soil or vegetation working implement

(30) Priorité: 20.05.1996 FR 9606222
(43) Date de publication de la demande: 26.11.1997
(73) Titulaire: ETABLISSEMENTS JEAN MOREAU, 59159 Marcoing (FR)
(72) Inventeur: Jette, Etienne, 59159 Marcoing (FR)
(74) Mandataire: Colas, Jean-Pierre

(56) Documents cités:
- WO-A-90/07867
- WO-A-92/09190
- FR-A- 1 483 739
- FR-A- 2 332 066
- FR-A- 2 627 050
- US-A- 3 498 387
- US-A- 4 138 063
- US-A- 4 529 040

## Description

La présente invention est relative à un appareillage de traitement de sol ou de végétaux conforme au préambule de la revendication 1 (voir p.ex. WO 92/09190).

On connaît depuis longtemps des appareillages d'épandage d'eau ou de liquide de traitement qui comprennent une rampe pliable, qui, en position de travail atteint une largeur qui peut dépasser 30 mètres, cette rampe étant formée de plusieurs tronçons qui viennent se placer longitudinalement le long des côtés du véhicule porteur pour les déplacements sur route.

Une telle disposition exige que la rampe ait des dimensions limitées dans une direction perpendiculaire à son allongement, et que le véhicule lui-même ait des dimensions transversales suffisamment faibles pour qu'on puisse loger sur ses côtés les tronçons repliés de la rampe sans sortir du gabarit réglementaire.

On a actuellement tendance à charger les véhicules porteurs de divers accessoires, par exemple des trémies ou des réservoirs qu'on souhaite les plus grands possibles, si bien qu'il ne reste pas de place pour loger sur les côtés un dispositif de traitement ayant une certaine importance dans une direction perpendiculaire à son allongement, replié pour un déplacement sur route.

L'invention a été mise au point pour résoudre un problème relatif à l'effeuillage des betteraves, avec des effeuilleuses capables de traiter, par exemple, 9 rangs de betteraves ce qui correspond à une largeur d'au moins 4,5 mètres. Ces dimensions sont très inférieures à celles qu'on atteint avec les outils d'épandage ou d'arrosage dont on a parlé ci-dessus, mais elles sont suffisantes pour imposer des opérations supplémentaires afin de permettre le déplacement sur route. L'invention n'est cependant pas limitée à des effeuilleuses à betteraves, mais peut s'appliquer à d'autres matériels, par exemple des semoirs, dans lesquels la largeur transversale, en position de travail ne correspond pas aux dimensions réglementaires pour le déplacement sur route, et qui sont portés par un véhicule porteur muni de silos, réservoirs ou autres accessoires auxquels on désire affecter la plus grande largeur possible du véhicule.

L'invention a pour but de résoudre ce problème, et de fournir un appareillage qui puisse, moyennant des opérations simples et rapides, passer d'une position de travail à une position de route, cet appareillage étant néanmoins de constructions robuste et peu coûteuse.

L'invention fournit, pour atteindre ce but un appareillage conforme à la revendication 1.

On démontre géométriquement que, lorsqu'un objet allongé pivote autour d'un axe qui le rencontre, et qui ne lui est ni parallèle, ni perpendiculaire, cet objet décrit une fraction de cône de révolution. On démontre également qu'il existe une infinité d'axes de pivotement possibles permettant le passage de cet objet allongé d'une première position définie à une seconde position définie, et leur détermination n'exige que des raisonnements géométriques simples. Si, par exemple, on veut amener un tronçon du dispositif de traitement depuis une position horizontale et transversale à une position verticale, on devra choisir l'axe de pivotement dans un plan dirigé longitudinalement et faisant un angle de 45° avec la verticale.

Si l'articulation est située au voisinage immédiat d'une des extrémités du tronçon, le pivotement peut se faire entièrement au-dessus du niveau de cette articulation. Au contraire, si l'articulation est située à distance des deux extrémités du tronçon, l'une des extrémités du tronçon va s'élever vers le haut pendant que l'autre se déplace vers le bas. Pour éviter qu'au cours de ce mouvement, l'extrémité du tronçon qui se déplace vers le bas rencontre le sol, il est prévu que la plaque-support est mobile verticalement par rapport au véhicule porteur. Dans une réalisation simple, la plaque-support est reliée à un système d'attelage trois points du véhicule porteur, par l'intermédiaire d'une tringlerie équipée de moyens élévateurs tels que des vérins.

Le dispositif de traitement est généralement loin d'avoir la forme d'une poutre à section régulière, par exemple rectangulaire ou circulaire. Par exemple, dans le cas d'une effeuilleuse, celle-ci est pourvue de roues de guidage, généralement situées en avant dans la disposition de travail. Il est avantageux que le mouvement de pivotement décrit plus haut se déroule à la fois sans risque d'accrochage de certaines parties de la pièce en pivotement, et de telle façon que les éléments faisant saillie, tels que les roues de guidage, soient, en position de route, bien extérieurs au gabarit. Pour obtenir ce résultat, il est prévu que la plaque-support peut pivoter autour d'un axe de pivotement auxiliaire, transversal par rapport à la direction de déplacement. De cette manière, l'opération de passage de la situation de travail à la situation de route se fait en deux temps : dans un premier temps, un basculement de la plaque-support fait pivoter le tronçon autour d'un axe parallèle à son allongement, pour lui donner l'orientation convenable, et dans un deuxième temps, le pivotement amène le tronçon dans la disposition convenable pour le déplacement sur route. Les deux opérations peuvent être exécutées dans un ordre indifférent, ou bien être simultanées. Elles peuvent également être combinées avec une opération de levage telle que celle qui a été indiquée ci-dessus, toutes ces opérations pouvant se faire simultanément ou dans un ordre convenablement choisi.

L'invention va être exposée plus en détail à l'aide d'un exemple pratique relatif à une effeuilleuse de betteraves conforme à l'invention, formée de deux tronçons, cet exemple étant illustré à l'aide des dessins parmi lesquels :
Figure 1 est une vue de côté d'une partie d'un appareillage comportant l'effeuilleuse, en position de travail
Figure 2 est une vue analogue à la figure 1, montrant l'appareillage après une première étape du passage à la position de route
Figure 3 est une vue perspective correspondant à la situation de la figure 2
Figure 4 est une vue analogue aux figures 1 et 2, montrant l'appareillage après une deuxième étape du passage à la position de route
Figure 5 est une vue de face de l'appareillage pendant le déroulement d'une troisième étape du passage à la position de route
Figure 6 est une vue perspective correspondant à la situation de la figure 5
Figure 7 est une vue analogue aux figures 1,2 et 4, montrant l'appareillage en position de route
Figure 8 est une vue de face de l'appareillage en position de route
Figure 9 est une vue en perspective correspondant à la situation de la figure 7.

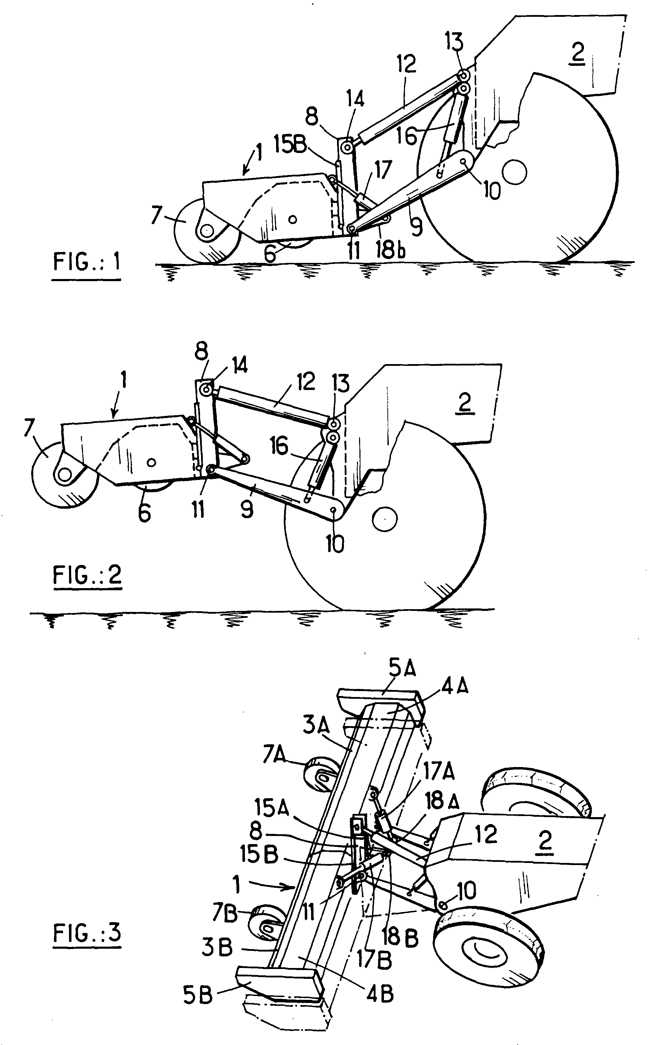

La figure 1 montre en position de travail une effeuilleuse 1 montée à l'avant d'un tracteur 2. Bien entendu, l'effeuilleuse, comme un autre dispositif pliable pourrait également être montée à l'arrière d'un tracteur ou autre véhicule automoteur. La géométrie de l'appareillage, qu'on va décrire plus loin serait cependant légèrement différente selon que le dispositif repliable est placé à l'avant ou à l'arrière. En effet, l'avant du tracteur, qui comporte le moteur présente généralement une hauteur relativement faible par rapport au gabarit, alors que l'arrière d'un tracteur présente généralement une paroi terminale à peu près verticale. De même, dans le cas d'une arracheuse de betteraves automotrice, la partie avant de l'engin présente une faible hauteur par comparaison à la partie arrière, dans laquelle est fréquemment disposée une trémie dont on cherche à rendre le volume le plus grand possible.

L'effeuilleuse est formée de deux tronçons, 3A,3B, visibles à la figure 3, comportant chacun un capotage 4A,4B, dont la forme est approximativement celle d'un demi-cylindre transversal, par rapport à la direction de marche, ouvert en direction du sol. Les extrémités les plus écartées du plan de symétrie de l'appareillage portent chacune un carter 5A,5B, qui contient le mécanisme d'entrainement d'un rotor 6, dont l'extrémité inférieure est seule visible sur la figure 1, et qui porte les organes d'enlèvement des feuilles des betteraves. Dans le plan vertical longitudinal de symétrie de l'appareillage, les capotages 4A,4B sont en prolongement l'un de l'autre, tant que l'appareillage est en position de travail. Chaque capotage 4A,4B porte à l'avant, une roue de guidage 7A,7B, qui repose sur le sol et permet de maintenir l'effeuilleuse à une hauteur convenable au-dessus du sol. L'effeuilleuse porte à sa partie arrière, c'est-à-dire celle qui est tournée vers le tracteur 2, une plaque-support 8, qui est reliée à un système d'attelage à trois points du tracteur 2 par l'intermédiaire de deux bielles inférieures 9, articulées sur le système d'attelage par des articulations transversales et coaxiales 10 et sur la plaque-support 8, par des articulations transversales et coaxiales 11. Un vérin supérieur 12 est relié par une articulation 13 au système d'attelage du tracteur et par une autre articulation, également à axe horizontal et transversal 14, à la plaque-support 8. Un vérin 16 permet de faire varier la hauteur de la plaque-support 8 par rapport au véhicule 2 et à son système d'attelage trois points. Les tronçons 3A,3B d'effeuilleuse sont reliés à la plaque-support 8 par l'intermédiaire de deux articulations 15A,15B, situées dans le plan vertical de la plaque 8, mais obliques par rapport à la verticale. Comme le montre la figure 3, les articulations 15A,15B convergent vers le haut en faisant un angle de l'ordre de 45° avec la verticale. La plaque-support 8 porte vers l'arrière, deux consoles 18A,18B, lesquelles portent les points d'articulation de vérins 17A,17B, dont l'extrémité opposée est fixée sur le tronçon 3A, 3B correspondant. Chaque vérin 17A,17B est perpendiculaire à l'articulation 15A,15B correspondante, et permet donc de faire pivoter chacun le tronçon correspondant autour de l'axe de cette articulation 15A ou 15B.

On observera que les tronçons 3A,3B ne sont pas articulés directement l'un sur l'autre, mais reliés de façon articulée à la plaque-support 8, laquelle porte les moyens permettant de relier l'effeuilleuse au véhicule porteur. Une telle structure permet de conserver la disposition relative des articulations 11 et 14, ce qui évite de recourir à des articulations à rotule.

Dans la structure représentée au dessin, les deux tronçons 3A,3B viennent bout à bout en position de travail.

La figure 2 permet de comprendre la première des opérations permettant le passage de la position de travail, représentée à la figure 1, à la position de route. Cette première opération consiste simplement à élever l'ensemble formé par la plaque-support et l'effeuilleuse, en agissant sur le vérin 16, de façon à faire pivoter vers le haut les bras 9 ainsi que le vérin supérieur 12, la plaque-support 8 demeurant verticale. Cette opération a pour but d'écarter l'effeuilleuse du sol, pour éviter tout risque de rencontre d'une partie de celle-ci avec le sol au cours des opérations qui suivront.

A la figure 3, on a représenté, en traits mixtes légers, la position de travail qui correspond à la figure 1.

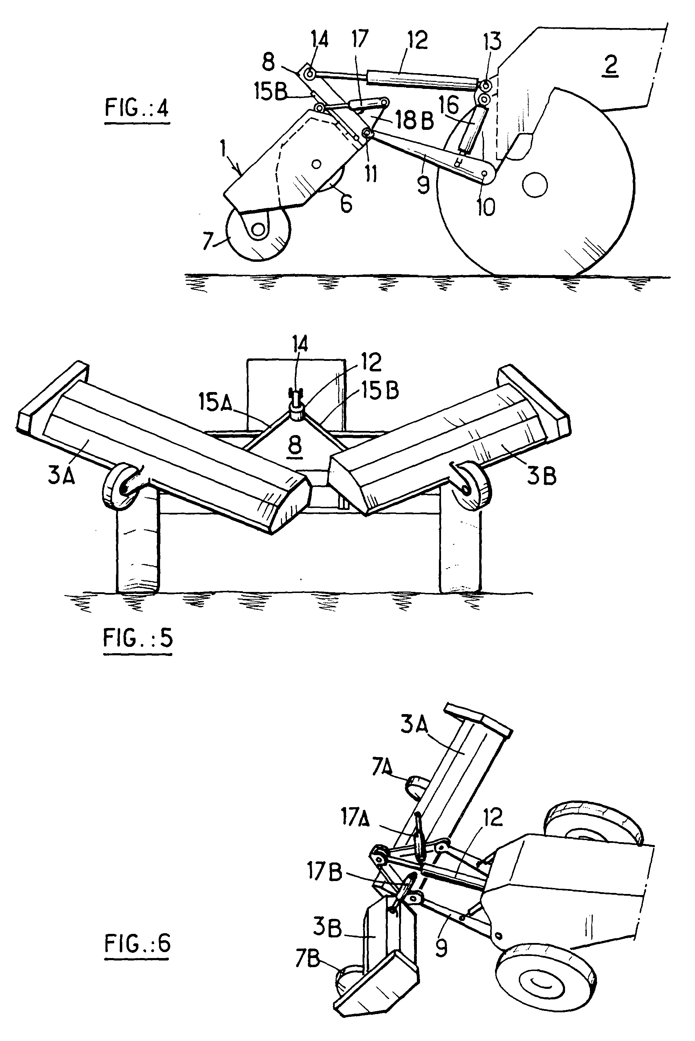

La figure 4 permet de comprendre la deuxième opération du passage à la position de route. Cette deuxième opération consiste en un basculement de la plaque-support 8 vers l'avant, autour de l'axe transversal constitué par les articulations 11. Ce déplacement est obtenu par actionnement du vérin supérieur 12. La plaque-support bascule vers l'avant, et passe de la position verticale à une position où elle fait un angle de l'ordre de 55° avec la verticale. Ce déplacement a pour effet d'amener les articulations 15A, 15B, qui relient les tronçons 3A-3B à la plaque-support dans une orientation convenable pour l'opération suivante.

Cette opération sera mieux comprise à l'aide des figures 5 et 6. Elle consiste en un pivotement des tronçons 3A,3B autour des axes de pivotement des articulations 15A,15B qui relient ces tronçons à la plaque-support. Celle-ci demeure fixe pendant cette troisième opération dans la position qui est celle de la figure 4.

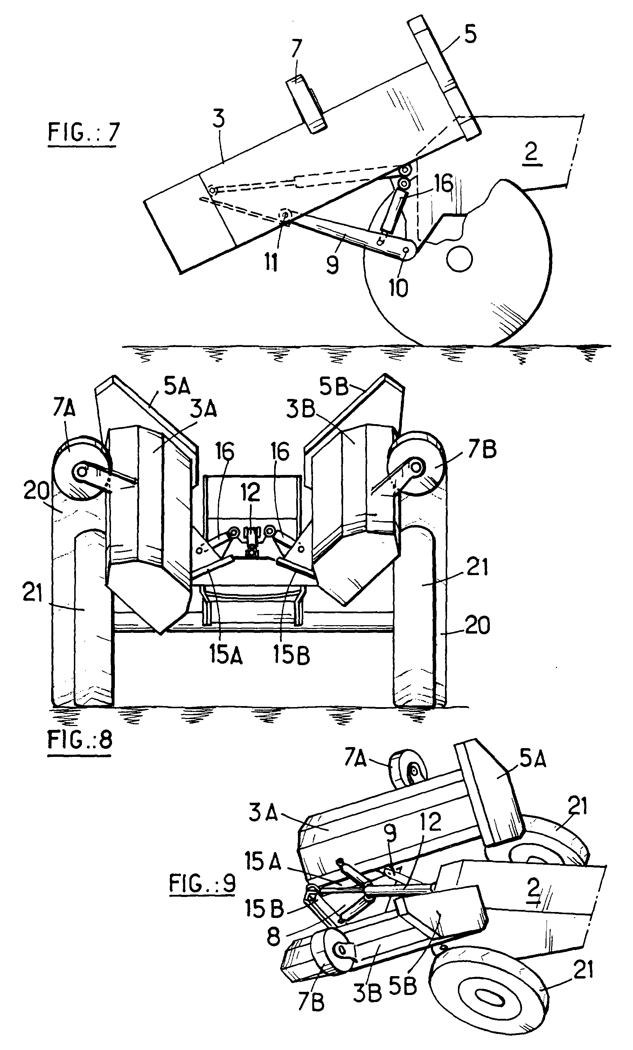

Le pivotement résulte de l'actionnement des vérins 17A,17B qui relient chaque tronçon à la plaque-support 8. A la fin de cette opération, les tronçons 3A,3B ont atteint leur position de route, qui est représentée aux figures 7,8 et 9. Comme on peut le voir sur ces figures, les tronçons 3A, 3B sont disposés parallèlement l'un à l'autre. Leur direction se trouve dans un plan longitudinal vertical, et elle est descendante vers l'avant. L'extrémité qui porte le carter 5A, 5B se trouve à proximité du moteur du tracteur 2, et un support peut être prévu à cet endroit pour soulager les bras porteurs 9, et diminuer l'effet des secousses. Les roues de guidage 7A,7B se trouvent à l'intérieur du gabarit du véhicule, définies par le contour des roues arrières 20 du tracteur, visible à la figure 8.

L'opération qui consiste à élever l'effeuilleuse au-dessus du sol permet d'opérer en évitant tout risque de contact avec le sol. On observera que cette opération est obtenue à l'aide du vérin de relevage 16, qui existe déjà normalement, si bien que cette opération n'exige pas de matériel supplémentaire. En ce qui concerne la deuxième opération, consistant en un basculement de la plaque-support 8, on peut observer, d'une part, qu'elle est obtenue à l'aide du vérin supérieur 12, qui est fréquemment prévu à l'avance sur les appareillages. On observera également, en observant les figures, que, si la seconde opération décrite plus haut n'avait pas été réalisée, les roues de guidage 7A,7B seraient en contact avec les roues avant 21 du tracteur 2.

La première opération, qui consiste en un relevage de l'effeuilleuse doit, pour des raisons de sécurité, être réalisée avant les autres opérations, mais les seconde et troisième opérations, peuvent sans inconvénient, être interverties, ou être réalisées complètement ou partiellement de façon simultanée.

Le passage de la position de route à la position de travail se fait en réalisant en sens inverse les opérations décrites pour passer de la position de travail à la position de route.

Les figures 7 à 9 montrent des tronçons qui, en position de route, sont inclinés de 40° environ sur l'horizontale. Une inclinaison différente est possible. On considère toutefois que la disposition décrite perd son intérêt pour une inclinaison inférieure à 15° environ.

## Revendications

1. Appareillage de traitement de sol ou de végétaux, comprenant un véhicule porteur (2) et un dispositif de traitement (1) monté à l'avant ou à l'arrière du véhicule, dispositif qui a, en fonctionnement, la forme générale d'une poutre allongée transversalement par rapport à la direction de déplacement du véhicule, le dispositif de traitement étant constitué de deux tronçons (3A, 3B) venant bout à bout en position de fonctionnement et reliés par des articulations, un pivotement des tronçons autour de ces articulations pouvant amener ces tronçons dans une position de route, où l'ensemble de l'appareillage a des dimensions extérieures conformes à la réglementation concernant les déplacements sur route, chacun desdits tronçons (3A, 3B) du dispositif du traitement étant relié par une articulation (15A, 15B) à une plaque-support (8) portée par le véhicule porteur, ledit appareillage comprenant a) un moyen (16) pour relever la plaque-support (8) et lesdits tronçons (3A, 3B) à partir de leur position de fonctionnement, ledit appareillage étant **caractérisé en ce qu'**il comprend en outre b) un moyen (12) pour faire pivoter vers l'avant respectivement vers l'arrière l'ensemble ainsi relevé autour d'un axe de pivotement auxiliaire (11) transversal par rapport à la direction de déplacement du véhicule porteur et c) des moyens (17A, 17B) pour faire pivoter chacun des tronçons (3A, 3B), à partir de ladite position relevée et pivotée, vers une position de route, lesdites articulations (15A, 15B) étant situées par rapport à la plaque-support (8) de telle manière que ledit pivotement, à partir de ladite position relevée et pivotée, amène le tronçon d'une position où il est orienté transversalement par rapport à la direction de déplacement du véhicule à une position de route, en partie au-dessus du véhicule porteur (2), où il est à peu près dans un plan vertical parallèle à la direction de déplacement, et oblique par rapport à la verticale, mais non horizontal.

2. Appareillage selon la revendication 1, **caractérisé en ce que** l'articulation (15A,15B) est située à distance des deux extrémités du tronçon (3A,3B), et la plaque-support (8) est mobile verticalement par rapport au véhicule porteur.

3. Appareillage selon l'une des revendications 1 et 2, **caractérisé en ce que** le dispositif de traitement comprend deux tronçons reliés chacun par une articulation à la plaque-support, ces articulations étant dans des positions calculées pour que, en situation de travail, les deux tronçons soient placés transversalement et en prolongement l'un de l'autre, et, en situation de route, ils sont placés parallèlement l'un à l'autre, dans des plans longitudinaux verticaux.

4. Appareillage selon l'une des revendications 1 à 3, **caractérisé en ce que** la plaque-support est reliée à un système d'attelage trois points monté sur le véhicule porteur (2) par des bielles (9) et/ou des vérins (12,16).

5. Appareillage selon l'une des revendications 1 à 4, **caractérisé en ce que** le dispositif de traitement (1) est une effeuilleuse de betteraves.

## Patentansprüche

1. Maschine für die Boden- und Pflanzenbearbeitung mit einem tragenden Fahrzeug (2) und einer Bearbeitungsvorrichtung (1), die vorne oder hinten am Fahrzeug angeordnet sein kann und die beim Betrieb in Fahrtrichtung des Fahrzeuges gesehen die Form eines im Wesentlichen quer hierzu verlaufenden Balkens hat, wobei die Bearbeitungsvorrichtung (1) zwei über eine Gelenkverbindung verbundene Abschnitte (3A, 3B) aufweist, die in der Arbeitsstellung aneinander liegen, wobei durch Verschwenkung der Abschnitte um diese Gelenkverbindungen die Abschnitte in eine Transportstellung bringbar sind, in der die gesamte Einheit der Maschine äußere Abmessungen erhält, die mit den Bestimmungen für den Strassentransport übereinstimmen, wobei jeder der genannten Abschnitte (3A, 3B) der Bearbeitungsvorrichtung über eine Gelenkverbindung (15A, 15B) mit einer vom Fahrzeug getragenen Tragplatte (8) verbunden ist und die genannte Maschine
a) ein Mittel (16) für das Anheben der Tragplatte (8) und der genannten Abschnitte (3A, 3B) aus ihrer Arbeitsstellung aufweist, wobei die genannte Maschine **dadurch gekennzeichnet ist, dass** sie ferner aufweist
b) ein Mittel (12) für das Verschwenken nach vorne bzw. nach hinten der somit angehobenen Einheit, um eine quer zur Fahrtrichtung des tragenden Fahrzeuges (2) liegende Hilfsschwenkachse (11) und
c) Mittel (17A, 17B), zum Verschwenken von jedem der Abschnitte (3A, 3B), aus der genannten angehobenen und geschwenkten Stellung in eine Transportstellung, wobei die genannten Gelenkverbindungen (15A, 15B) in Bezug zur Tragplatte (8) derart angeordnet sind, dass die genannte Verschwenkung aus der genannten angehobenen und geschwenkten Stellung, den Abschnitt aus einer Position, in der dieser quer zur Fahrtrichtung des Fahrzeuges ausgerichtet ist, in eine Transportstellung bringt, in der er teilweise das tragende Fahrzeug (2) überragt und wo er etwa in einer vertikalen Ebene parallel zur Fahrtrichtung und schräg zur Vertikalen, jedoch nicht horizontal liegt.

2. Maschine nach Anspruch 1, **dadurch gekennzeichnet, dass** die Gelenkverbindung (15A, 15B) mit Abstand zu den beiden Enden der Abschnitte (3A, 3B) angeordnet ist, und dass die Tragplatte (8) vertikal verschiebbar zum tragenden Fahrzeug ist.

3. Maschine nach einem der Ansprüche 1 oder 2, **dadurch gekennzeichnet, dass** die Bearbeitungsvorrichtung zwei Abschnitte aufweist, die jeweils mit einer Gelenkverbindung an der Tragplatte befestigt sind, und dass die Gelenkverbindungen in Stellungen sind, die so berechnet sind, dass in der Arbeitsstellung die beiden Abschnitte quer und in Verlängerung zueinander und in der Transportstellung parallel zueinander in einer vertikalen Längsebene liegen.

4. Maschine nach einem der Ansprüche 1 bis 3, **dadurch gekennzeichnet, dass** die Tragplatte an einer Dreipunktkupplung befestigt ist, die mit dem tragenden Fahrzeug über Lenker (9) und/oder über Hubeinrichtungen (12, 16) verbunden ist.

5. Maschine nach einem der Ansprüche 1 bis 4, **dadurch gekennzeichnet, dass** die Bearbeitungsvorrichtung (1) ein Zuckerrübenentblätterer ist.

## Claims

1. Apparatus for treating the ground or plant matter, comprising a carrying vehicle (2) and a treatment device (1) mounted at the front or at the rear of the vehicle, which device has, in operation, the overall shape of a beam elongate transversely with respect to the direction of travel of the vehicle, the treatment device consisting of two portions (3A, 3B) lying end to end in the operating position and connected by articulations, a pivoting of the portions about these articulations being able to bring these portions into a road-going position in which the entire apparatus has external dimensions that comply with the regulations regarding road travel, each of said portions (3A, 3B) of the treatment device being connected by an articulation (15A, 15B) to a support plate (8) carried by the carrying vehicle, said apparatus comprising a) a means (16) for raising the support plate (8) and said portions (3A, 3B) from their operating position, said apparatus being **characterized in that** it further comprises b) a means (12) for causing the assembly thus raised to pivot forward or, respectively, backward, about an auxiliary axis (11) of pivoting that is transversal with respect to the direction of travel of the carrying vehicle, and c) means (17A, 17B) for causing each of the portions (3A, 3B) to pivot from said raised and pivoted position into a road-going position, said articulations (15A, 15B) being located with respect to the support plate (8) in such a way that said pivoting from said raised and pivoted position brings the portion from a position in which it is oriented transversely with respect to the direction of travel of the vehicle into a road-going position, partially above the carrying vehicle (2), in which it is more or less in a vertical plane parallel to the direction of travel, and oblique with respect to the vertical, but not horizontal.

2. Apparatus according to claim 1, **characterized in that** the articulation (15A, 15B) lies a distance from the two ends of the portion (3A, 3B) and the support plate (8) can move vertically with respect to the carrying vehicle.

3. Apparatus according to one of claims 1 and 2, **characterized in that** the treatment device comprises two portions each connected by an articulation to the support plate, these articulations being in positions which are calculated so that in the work situation the two portions are placed transversely and one in the continuation of the other and in the road-going situation they are placed parallel to one another in vertical longitudinal planes.

4. Apparatus according to one of claims 1 to 3, **characterized in that** the support plate is connected to a three point hitching system mounted on the carrying vehicle (2) by links (9) and/or jacks (12, 16).

5. Apparatus according to one of claims 1 to 4, **characterized in that** the treatment device (1) is a beet topper.
